# EUROPÄISCHE PATENTSCHRIFT

(11) **EP 2 272 076 B1**
(45) Veröffentlichungstag und Bekanntmachung des Hinweises auf die Patenterteilung: **06.11.2013**
(21) Anmeldenummer: 08749350.8
(22) Anmeldetag: 06.05.2008
(51) Int. Cl.: H01H 71/12, H01H 55/00, H01H 71/24

(54) **SCHALTVORRICHTUNG**
SWITCHING DEVICE
DISPOSITIF DE COMMUTATION

(43) Veröffentlichungstag der Anmeldung: 12.01.2011
(73) Patentinhaber: Siemens Aktiengesellschaft, 80333 München (DE)
(72) Erfinder: FEIL, Wolfgang, 92421 Schwandorf (DE); HASSEL, Jörg, 91058 Erlangen (DE)
(86) Internationale Anmeldenummer: PCT/EP2008/003628
(87) Internationale Veröffentlichungsnummer: WO 2009/135500

(56) Entgegenhaltungen:
- WO-A-2007/057030
- DE-A1- 19 503 235
- DE-A1- 19 632 347
- US-A- 2 945 105

## Beschreibung

Die Erfindung betrifft eine Schaltvorrichtung mit einem beweglichen Kontakt zum Schließen und Öffnen eines Stromkreises und mit einer magnetischen Formgedächtnislegierung, durch die die Stellung des beweglichen Kontakts veränderbar ist.

Eine derartige Schaltvorrichtung ist aus der WO 2007/057030 A1 bekannt, in der der Auslöseanker des Antriebs zur Auslösung bei Kurzschlußströmen aus einer ferromagnetischen Formgedächtnislegierung besteht.

Andererseits ist bekannt, dass bestimmte Formgedächtnislegierungen magnetsensitiv sind und bei Durchdringung mit einem Magnetfeld eine Längenänderung erfahren. Die bei der Längenänderung erzeugte Kraft kann grundsätzlich als Antriebskraft genutzt werden. Die bekannten magnetischen Formgedächtnislegierungen zeigen technisch verwendbares Längenänderungsverhalten nur in starken Magnetfeldern von mindestens 0,5 Tesla auf. Bei technischen Anwendungen wie der vorliegenden Schaltvorrichtung müssen hohe Ansteuerströme mit entsprechend hohem Energieverbrauch vermieden werden.

Daher liegt der Erfindung die Aufgabe zugrunde, eine Schaltvorrichtung der oben genannten Art vorzuschlagen, die einen magnetfeldsensitiven Antrieb aus magnetischer Formgedächtnislegierung aufweist und die für den Haltebetrieb nur einen geringen Stromverbrauch zur Erzeugung eines Magnetfelds in der Formgedächtnislegierung erfordert.

Die Aufgabe wird durch eine Schaltvorrichtung mit den Merkmalen gemäß Anspruch 1 gelöst. Dabei ist ein beweglich gelagerter Magnet vorgesehen, durch dessen Lageänderung ein auf die magnetische Formgedächtnislegierung wirkendes Magnetfeld zum Schließen und Öffnen des Stromkreises veränderbar ist. Dies ermöglicht auf einfache Weise die von der Formgedächtnislegierung ausgehende, auf den beweglichen Kontakt wirkende Antriebskraft zu steuern.

Vorteilhafte Weiterbildungen der Erfindung sind den Unteransprüchen 2 bis 7 zu entnehmen.

Besonders vorteilhaft ist es, wenn gemäß Anspruch 2 der Magnet als Ferromagnet ausgeführt ist

Weiterhin ist es vorteilhaft, wenn gemäß Anspruch 3 ein Antrieb vorgesehen ist, durch den die Lage des Magneten veränderbar ist.

Außerdem ist es von Vorteil, wenn gemäß Anspruch 4 eine Platte vorgesehen ist, die die Antriebskraft der Formgedächtnislegierung an den beweglichen Kontakt weiterleitet.

Weist die Platte gemäß Anspruch 5 einen hohen Elastizitätsmodul auf, wird sichergestellt, dass die Formgedächtnislegierung gleichmäßig mit geringem Druck beaufschlagt wird.

Vorteilhafter Weise ist gemäß den Ansprüchen 6 und 7 zwischen dem beweglichen Kontakt und der Formgedächtnislegierung ein plattenförmiges Bauteil vorgesehen, das eine kleine Wärmeleitzahl und eine geringe Strahlungsabsorption aufweist, was einen Wärmeschutz gegen in Wärme umgewandelte Schaltenergie bewirkt.

Ausführungsbeispiele werden im Folgenden anhand einer Zeichnung näher erläutert. Es zeigen:
- FIG 1: eine schematische Darstellung einer erfindungsgemäßen Schaltvorrichtung mit einer magnetfeldsensitiven Formgedächtnislegierung und einer davon getrennten technischen Einrichtung zur Steuerung eines die Formgedächtnislegierung durchdringenden Magnetfeldes,
- FIG 2: ein Ausführungsbeispiel der erfindungsgemäßen Schaltvorrichtung nach FIG 1 in der AUS-Stellung mit einem beweglich gelagerten Magneten und
- FIG 3: ein Ausführungsbeispiel der erfindungsgemäßen Schaltvorrichtung nach FIG 1 in der EIN-Stellung mit einem beweglich gelagerten Magneten.

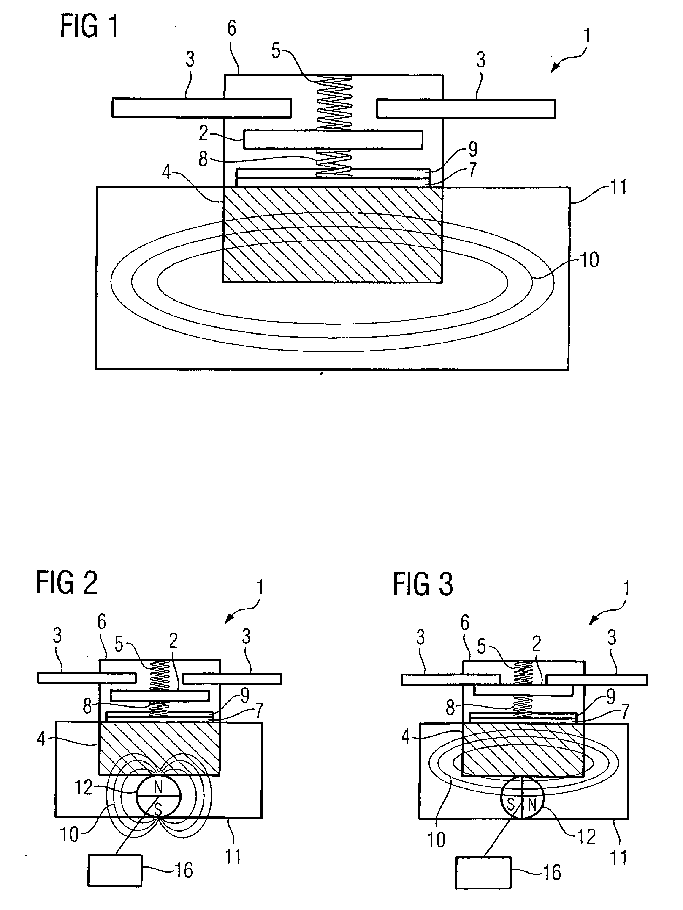

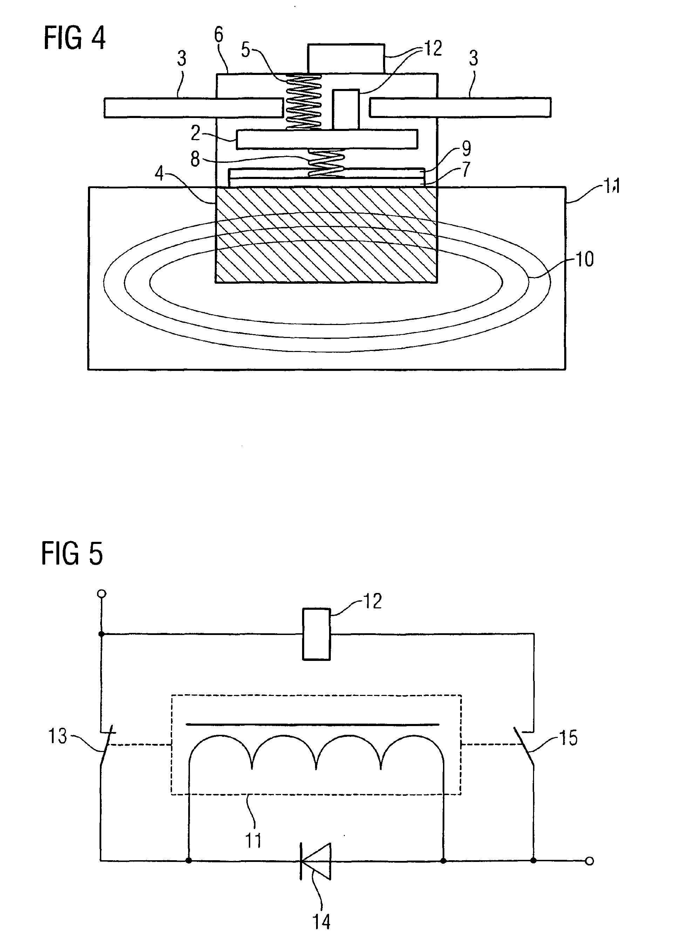

In FIG 1 ist schematisch eine erfindungsgemäße Schaltvorrichtung 1 mit einem beweglichen Kontakt 2 und zwei Festkontakten 3 zum Ein- und Ausschalten eines Stromkreises dargestellt. Die Schaltvorrichtung 1 weist einen magnetfeldsensitiven Antrieb aus einer magnetischen Formgedächtnislegierung 4 auf, die auf den beweglichen Kontakt 2 eine Antriebskraft zum Schließen des Stromkreises ausübt. Der Antrieb wird in der Ruheposition mittels einer Feder 5, die am Gehäuse 6 abgestützt ist, mit einem Druck beaufschlagt, der die Funktion des Antriebs in zwei Richtungen sicherstellt. Zum optimalen Betrieb des magnetfeldsensitiven Antriebs wird mithilfe einer Platte 7 sichergestellt, dass die Formgedächtnislegierung 4 gleichmäßig mit geringem Druck beaufschlagt wird. Dies lässt sich durch die Platte 7 mit hohem Elastizitätsmodul erreichen, die die Oberfläche der Formgedächtnislegierung 4 in Richtung der Kontakte 2,3 so weit technisch möglich abdeckt. Die Platte 7 ist zwischen der Feder 5 und der Formgedächtnislegierung 4 angeordnet und treibt über eine Feder 8 den beweglichen Kontakt 2 an. Mittels eines plattenförmigen Bauteils 9 mit kleiner Wärmeleitzahl und schlechter Strahlungsabsorption wird die Formgedächtnislegierung 4 möglichst vor Erwärmung durch in Wärme umgewandelte Schaltenergie geschützt.

Das steuernde Magnetfeld 10 in der Formgedächtnislegierung 4 wird mithilfe einer technischen Vorrichtung 11 erzeugt. Durch das steuernde Magnetfeld in der Formgedächtnislegierung 4 erfährt diese eine Längenausdehnung und bringt somit den beweglichen Kontakt 2 zum Schließen mit den Festkontakten 3. Dies erfolgt über die Feder 8, die die benötigte Kontaktkraft zum Führen des Stromes sicherstellt.

Um den Antrieb mit der magnetischen Formgedächtnislegierung 4 voll auszunutzen, muss das Magnetfeld diese möglichst homogen bei gleichzeitig hoher Feldstärke durchdringen. Dies kann durch geeignete Anordnung ferromagnetischer Bauteile zwischen der technischen Vorrichtung 11 zur Erzeugung der magnetischen Erregung und der magnetischen Formgedächtnislegierung 4 erreicht werden.

Es ist keine Spule mit Eisenkreis vorgesehen, die zur ausschließlichen Erzeugung des Magnetfelds in der für die notwendige Längenänderung der Formgedächtnislegierung 4 erforderlichen Höhe dient, um hiermit den Haltebetrieb zu bewirken. Hierfür wären dauerhaft hohe Ströme erforderlich, die einen unakzeptabel hohen Stromverbrauch zur Folge hätten, was aber durch die vorliegende Erfindung vermieden werden soll.

Stattdessen wird in dem folgenden Ausführungsbeispiel nach FIG 2 und 3 ein Aktor 12, hier ein beweglich gelagerter, ferromagnetischer Permanentmagnet eingesetzt, dessen Lage durch einen Antrieb 16 veränderbar ist.

In der Kontaktstellung AUS gemäß FIG 2 befindet sich der Permanentmagnet in der Lage, in der nur ein Bruchteil des Magnetfeldes des Permanentmagneten die Formgedächtnislegierung 4 durchdringt. Zum Einschalten, d.h. Schließen der Schaltvorrichtung wird mithilfe des Antriebs 16 eine Rotation des Permanentmagneten um 90° veranlasst. Dadurch wird die Formgedächtnislegierung 4 mit dem gesamten Magnetfeld des Permanentmagneten durchflutet und bringt den beweglichen Kontakt 2 zum Schließen mit den Festkontakten 3 gemäß FIG 3. Der bewegliche Kontakt 2 fällt wieder ab, wenn der Permanentmagnet aktiv durch den rotatorischen Antrieb 16 in die Stellung AUS gebracht wird oder mithilfe eines Kraftspeichers, der bei Abfallen der Steuerspannung den Magneten in Stellung AUS bringt. In beiden Fällen liegt wieder die in FIG 2 gezeigte Kontaktstellung vor.

Die in dem Ausführungsbeispiel erläuterte Anordnung ermöglicht es, die Baugröße eines Schützantriebes zu verkleinern. Durch die relativ hohe mechanische Vorspannung ist es nicht mehr nötig, einen Großteil des Anzugsweges für einen Sicherheitsabstand zur Gewährleistung von Schwing- und Schockfestigkeit zu reservieren, wie dies in konventionellen Relais und Schützen derzeit der Fall ist. Dies hält das Bauvolumen der Formgedächtnislegierung 4 klein. Ein Quader einer Formgedächtnislegierung 4 mit 2 cm² Grundfläche und 8 cm Höhe reicht mit guter Sicherheit aus, um einen Schaltweg von 4 mm bei 100 N Kraftbeaufschlagung zu gewährleisten. Die große Kraft der Formgedächtnislegierung ermöglicht es, die Stellwege über Hebel weiter zu vergrößern.

Die in dem Ausführungsbeispiel aufgezeigte technische Lösung für die Erzeugung des steuernden Magnetfelds hat ebenfalls bei vergleichbarer Leistung geringere Abmessungen als ein konventioneller Reluktanzantrieb.

## Patentansprüche

1. Schaltvorrichtung (1) mit einem beweglichen Kontakt (2) zum Schließen und Öffnen eines Stromkreises und mit einer magnetischen Formgedächtnislegierung (4), durch die die Stellung des beweglichen Kontakts (2) veränderbar ist, **dadurch gekennzeichnet, dass** ein beweglich gelagerter Magnet (12) vorgesehen ist, durch dessen Lageänderung ein auf die magnetische Formgedächtnislegierung (4) wirkendes Magnetfeld zum Schließen und Öffnen des Stromkreises veränderbar ist.

2. Schaltvorrichtung nach Anspruch 1, **dadurch gekennzeichnet, dass** der Magnet (12) als Ferromagnet ausgeführt ist.

3. Schaltvorrichtung nach Anspruch 1 oder 2, **dadurch gekennzeichnet, dass** ein Antrieb (16) vorgesehen ist, durch den die Lage des Magneten (12) veränderbar ist.

4. Schaltvorrichtung nach einem der vorangehenden Ansprüche, **dadurch gekennzeichnet, dass** eine Platte (7) vorgesehen ist, die die Antriebskraft der Formgedächtnislegierung (4) an den beweglichen Kontakt (2) weiterleitet.

5. Schaltvorrichtung nach Anspruch 4, **dadurch gekennzeichnet, dass** die Platte (7) einen hohen Elastizitätsmodul aufweist.

6. Schaltvorrichtung nach einem der vorangehenden Ansprüche, **dadurch gekennzeichnet, dass** zwischen dem beweglichen Kontakt (2) und der Formgedächtnislegierung (4) ein plattenförmiges Bauteil (9) vorgesehen ist, das eine kleine Wärmeleitzahl aufweist.

7. Schaltvorrichtung nach einem der vorangehenden Ansprüche, **dadurch gekennzeichnet, dass** das Bauteil (9) eine geringe Strahlungsabsorption aufweist.

## Claims

1. Switching device (1) with a movable contact (2) for closing and opening a circuit and with a magnetic shape memory alloy (4), by means of which the position of the movable contact (2) can be changed, **characterized in that** a movably mounted magnet (12) is provided, it being possible to change a magnetic field acting on the magnetic shape memory alloy (4) for closing and opening the circuit by virtue of changing the position of said magnet.

2. Switching device according to claim 1, **characterized in that** the magnet (12) is the form of a ferromagnet.

3. Switching device according to claim 1 or 2, **characterized in that** a drive (16) is provided, by virtue of which the position of the magnet (12) can be altered.

4. Switching device according to one of the preceding claims, **characterized in that** a plate (7) is provided which passes on the drive force of the shape memory alloy (4) to the movable contact (2).

5. Switching device according to claim 4, **characterized in that** the plate (7) has a high modulus of elasticity.

6. Switching device according to one of the preceding claims, **characterized in that** a plate-shaped component part (9) which has a low thermal conductivity is provided between the movable contact (2) and the shape memory alloy (4).

7. Switching device according to one of the preceding claims, **characterized in that** the component part (9) has a low radiation absorption.

## Revendications

1. Dispositif (1) de commutation comprenant un contact (2) mobile pour la fermeture et l'ouverture d'un circuit et un alliage (4) magnétique à mémoire de forme, par lequel la position du contact (2) mobile peut être modifiée, **caractérisé en ce qu'**il est prévu un aimant (12) monté mobile, par la modification de position duquel un champ magnétique agissant sur l'alliage (4) magnétique à mémoire de forme peut être modifié pour la fermeture et l'ouverture du circuit.

2. Dispositif de commutation suivant la revendication 1, **caractérisé en ce que** l'aimant (12) est réalisé en aimant ferromagnétique.

3. Dispositif de commutation suivant la revendication 1 ou 2, **caractérisé en ce qu'**il est prévu un entraînement (16), par lequel la position de l'aimant (12) peut être modifiée.

4. Dispositif de commutation suivant l'une des revendications précédentes, **caractérisé en ce qu'**il est prévu une plaque (7), qui applique la force d'entraînement de l'alliage (4) à mémoire de forme au contact (2) mobile.

5. Dispositif de commutation suivant la revendication 4, **caractérisé en ce que** la plaque (7) a un grand module d'élasticité.

6. Dispositif de commutation suivant l'une des revendications précédentes, **caractérisé en ce qu'**il est prévu, entre le contact (2) mobile et l'alliage (4) à mémoire de forme, un élément (9) en forme de plaque, qui a un petit indice de conduction de la chaleur.

7. Dispositif de commutation suivant l'une des revendications précédentes, **caractérisé en ce que** l'élément (9) a une petite absorption du rayonnement.
